# EUROPÄISCHE PATENTSCHRIFT

(11) **EP 1 786 652 B1**
(45) Veröffentlichungstag und Bekanntmachung des Hinweises auf die Patenterteilung: **12.03.2008**
(21) Anmeldenummer: 05779656.7
(22) Anmeldetag: 30.08.2005
(51) Int. Cl.: B60R 9/055, E05B 65/42

(54) **STAUDRUCKABH[NGIGE DACHKOFFERVERRIEGELUNG**
ROOF CONTAINER LOCK THAT IS DEPENDENT ON DYNAMIC PRESSURE
VERROUILLAGE DE COFFRE DE TOIT DEPENDANT DE LA PRESSION DYNAMIQUE

(30) Priorität: 11.09.2004 DE 102004043962
(43) Veröffentlichungstag der Anmeldung: 23.05.2007
(73) Patentinhaber: Thule Sweden AB, 330 33 Hillerstorp (SE)
(72) Erfinder: FRITSCHE, Günther, 92353 Postbauer-Heng (DE); EMMERLING, Alexander, 92360 Sulzbürg (DE)
(74) Vertreter: Blaumeier, Jörg
(86) Internationale Anmeldenummer: PCT/DE2005/001512
(87) Internationale Veröffentlichungsnummer: WO 2006/026957

(56) Entgegenhaltungen:
- DE-U1- 29 508 826
- GB-A- 214 502
- GB-A- 266 171

## Beschreibung

Die Erfindung bezieht sich auf eine Schließsicherung für Dachkoffer zur Verhinderung eines Aufklappens des Kofferrandes durch zu hohen Winddruck oder bei Ausfall der normalen Schließanlage während der Fahrt, bei der ein Verriegelungsglied am einen Kofferteil in ein Gegenglied am anderen Kofferteil eingreift.

Bei einer aus dem Gebrauchsmuster DE 295 08 826 U1 bekannt gewordenen Schließsicherung der eingangs genannten Art ist am Deckelrand ein einschwenkbarer, in der eingeschwenkten Sicherungsstellung den Dichtrand des Unterteils frei untergreifender Sicherungshaken angelenkt, der beim Hochschwenken des Deckels unter den Rand des Bodenteils einhakt. Die Ausbildung ist dabei so getroffen, dass dieser Sicherungshaken durch sein Eigengewicht in die Verriegelungsstellung verschwenkt wird, in der er unterhalb des umbörtelten Randes des Unterteils des Dachkoffers liegt. Die Schließsicherung ist also ständig wirksam, was es erforderlich macht, dass der Benutzer zum Öffnen des Dachkoffers bei stehendem Fahrzeug diese Schließsicherung erst außer Betrieb setzen muss, indem er den Sicherungshaken zurückschwenkt, was aber wiederum Schwierigkeiten beim Betätigen der Schließeinrichtung des Deckels und dessen Hochschwenkens bereiten kann.

Der Erfindung liegt daher die Aufgabe zugrunde, eine Schließsicherung der eingangs genannten Art so auszubilden, dass sie bei stehendem Fahrzeug unwirksam ist und nur bei fahrendem Fahrzeug wirksam wird.

Zur Lösung dieser Aufgabe ist erfindungsgemäß vorgesehen, dass das am einen Kofferteil angeordnete federnd in eine Nicht-Eingriffstellung vorgespannte Verriegelungsglied so ausgebildet und angeordnet ist, dass es durch den Fahrtwind nur während der Fahrt in seine Verriegelungsstellung verschwenkt wird.

Ganz allgemein kann dabei das Verriegelungsglied mit einem Staudruck abhängigen Betätigungsglied beliebiger Art verbunden sein, das ausgehend von dem zunehmenden Staudruck mit zunehmender Geschwindigkeit des Fahrzeugs das Verriegelungsglied aus der Nicht-Eingriffsstellung in die Eingriffsstellung unter zusätzlichter Sicherungsverriegelung des Kofferdeckels am Kofferunterteil bewegt.

Im einfachsten Fall ist dabei das am einen Kofferteil angeordnete Verriegelungsglied ein Verriegelungshaken oder Verriegelungsstift, der einen Randflansch des Gegenkofferteils unter- bzw. übergreift bzw. in eine Querausnehmung dieses Gegenkofferteils eingreift.

Obgleich prinzipiell das Verriegelungsteil an jedem der Kofferteile angeordnet werden könnte, hat es sich für die Praxis als besonders zweckmäßig erwiesen, wenn das Verriegelungsteil am Dachkoffer-Oberteil angeordnet ist.

Eine besonders einfache und betriebssichere Ausführung einer erfindungsgemäßen Schließsicherung ergibt sich in Ausgestaltung der Erfindung dadurch, dass das Verriegelungsglied an einer durch den Fahrtwind beaufschlagten und in die Verriegelungsstellung verstellbaren Druckverstellplatte angeordnet ist, die ihrerseits an einem am einen Kofferteil befestigbaren Fußteil federnd rückstellbar gelagert ist.

Gemäß einer ersten Ausführung der vorliegenden Erfindung kann dabei diese Druckverstellplatte als Flügelplatte ausgebildet am vorzugsweise als Fußplatte ausgebildeten Fußteil schwenkbar gelagert sein, wobei die Schwenkachse sowohl horizontal, das heißt parallel zur Koffertrennebene, als auch vertikal, das heißt senkrecht zur Koffertrennebene angeordnet sein kann. Für die Praxis hat es sich aber als besonders zweckmäßig erwiesen, die horizontale Schwenklagerungsachse zu verwenden.

Bei einer anderen Ausführung der Erfindung bildet die Druckverstellplatte den Kolben eines Staudruckzylinders, der beispielsweise am vorderen Rand des Dachkoffers angeordnet ist, wobei die Kolbenstange dieses Staudruckzylinders entweder das Verriegelungsglied trägt oder dieses Verriegelungsglied direkt bildet.

Schließlich liegt es auch noch im Rahmen der Erfindung, dass die Druckverstellplatte eine das Verriegelungsglied tragende federelastische Membran ist.

Weitere Vorteile und Einzelheiten der Erfindung ergeben sich aus der nachfolgenden Beschreibung einiger Ausführungsbeispiele sowie anhand der Zeichnungen. Dabei zeigen:
- Fig. 1: eine Ansicht eines Dachkoffers von vorne mit einer am Deckel angeordneten erfindungsgemäßen Schließsicherung zum Untergreifen des Dichtrandes des Kofferunterteils in der Ruhestellung bei stehendem Fahrzeug gemäß einem ersten Ausführungsbeispiel,
- Fig. 2: eine Ansicht des Dachkoffers von vorne in der eingeschwenkten Verriegelungsstellung während der Fahrt,
- Fig. 3: einen Schnitt längs der Linie III - III in Fig. 1, wobei gestrichelt auch die Stellung des Verriegelungshakens in der Verriegelungsstellung nach Fig. 2 eingezeichnet ist,
- Fig. 4: einen der Fig. 3 entsprechenden Schnitt in einer Situation, in der durch den Fahrtwind der Dachkoffer am vorderen Ende geringfügig bis zum Wirksamwerden der Schließsicherung angehoben worden ist,
- Fig. 5: eine vergrößerte Detailansicht der Schwenklagerung der Anordnung nach den Fig. 1 - 4 mit der Rückstellfeder,
- Fig. 6: eine perspektivische Explosionsdarstellung eines zweiten Ausführungsbeispiels einer als Staudruckzylinder ausgebildeten Ausführung einer erfindungsgemäßen Schließsicherung,
- Fig. 7: einen Schnitt durch das vordere Ende des Dachkoffers mit der Schließsicherung gemäß Fig. 6 in der Ruhestellung,
- Fig. 8: einen der Fig. 7 entsprechenden Schnitt durch eine weitere Ausführung einer erfindungsgemäßen Schließsicherung, bei der die Druckverstellplatte als federelastische Membran ausgebildet ist, und
- Fig. 9 und 10: schematische Darstellungen der Ausgestaltung einer Schließsicherung mit schwenkbarer Flügelplatte, bei der die Schwenkachse vertikal angeordnet ist.

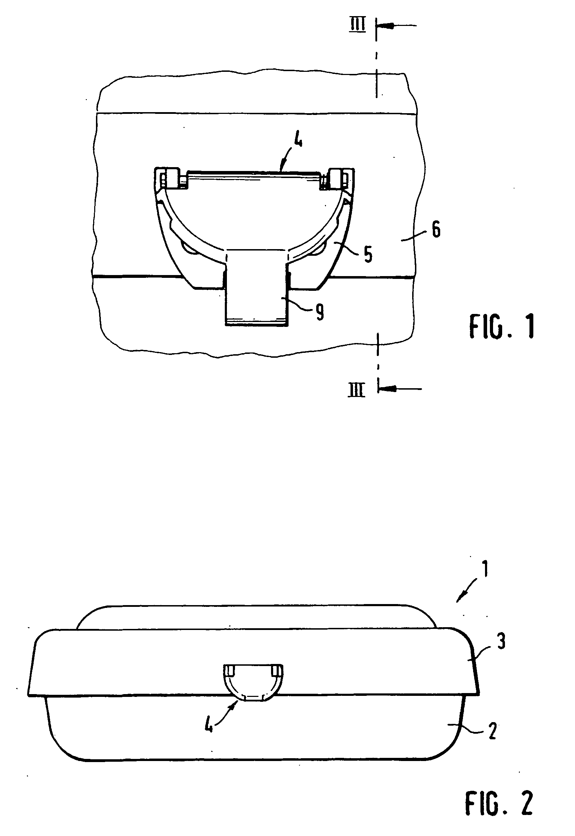

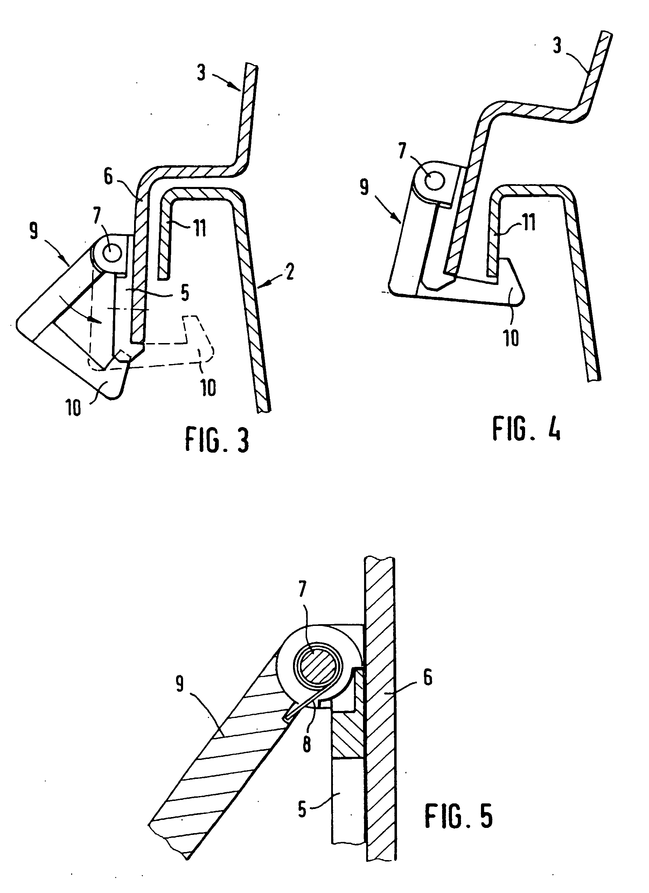

Bei dem in den Fig. 1 - 5 dargestellten ersten Ausführungsbeispiel der vorliegenden Erfindung erkennt man zunächst einen Dachkoffer 1 mit einem Kofferunterteil 2 und einem schwenkbar daran angelenkten Deckel 3, wobei es gleichgültig ist, ob die Schwenklagerung um die gegenüber der erkennbaren Vorderseite des Dachkoffers 1 abgelegene Hinterkante oder um eine der Seitenkanten des Deckels 3 erfolgt. Bei 4 ist eine erfindungsgemäße zusätzliche Schließsicherung angedeutet, die ein durch den Fahrtwind verursachtes Aufschwenken des Deckels 3 am vorderen Kofferende gegenüber dem Unterteil 2 während der Fahrt verhindert. Zu diesem Zweck ist die Schließsicherung 4 so ausgebildet, dass sie im Ruhestand, also bei stehendem Fahrzeug (Fig. 1 und 3 ausgezogen gezeichnet) in einer durch eine Feder vorgespannten Nicht-Verriegelungsstellung angeordnet ist und nur durch den Fahrtdruck in die Verriegelungsstellung (Fig. 2, 3 gestrichelt gezeichnet und Fig. 4) verschwenkt wird.

Die Schließsicherung 4 nach den Fig. 1 - 5 umfasst eine Fußplatte 5, die am Rand 6 des Deckels 3 befestigt ist, und eine an dieser Fußplatte 5 über ein Schwenklager 7 mit einer Rückstellfeder 8 schwenkbar gelagerten Druckverstellplatte, die hier als Flügelplatte 9 ausgebildet ist, und die einen Verriegelungshaken 10 trägt. Dieser Verriegelungshaken 10 ist in der Ruhestellung, das heißt bei stehendem Fahrzeug, in der in Fig. 3 ausgezogen dargestellten nach außen verschwenkten Stellung angeordnet und durch die Rückstellfeder in dieser Stellung gehalten, so dass der Deckel 3 ohne Weiteres geöffnet werden kann. Die Schließsicherung 4 ist also bei stehendem Fahrzeug überhaupt nicht wirksam.

Erst durch den Fahrtwind während der Fahrt wird die Flügelplatte 9 nach rechts in die in Fig. 3 gestrichelt eingezeichnete Stellung verschwenkt, so dass nunmehr der Verriegelungshaken 10 während der Fahrt immer unterhalb eines Dichtrandes 11 des Koffer-Unterteils 2 angeordnet ist, so dass bei zu hohem Winddruck, wenn sich der Deckel 3 tatsächlich etwas nach oben öffnen will, die in Fig. 4 skizzierte Fangsituation eintritt, bei der der Verriegelungshaken 10 nach nur einem relativ geringem Öffnungshub des Deckels 3 ein weiteres Aufgehen sicher verhindert.

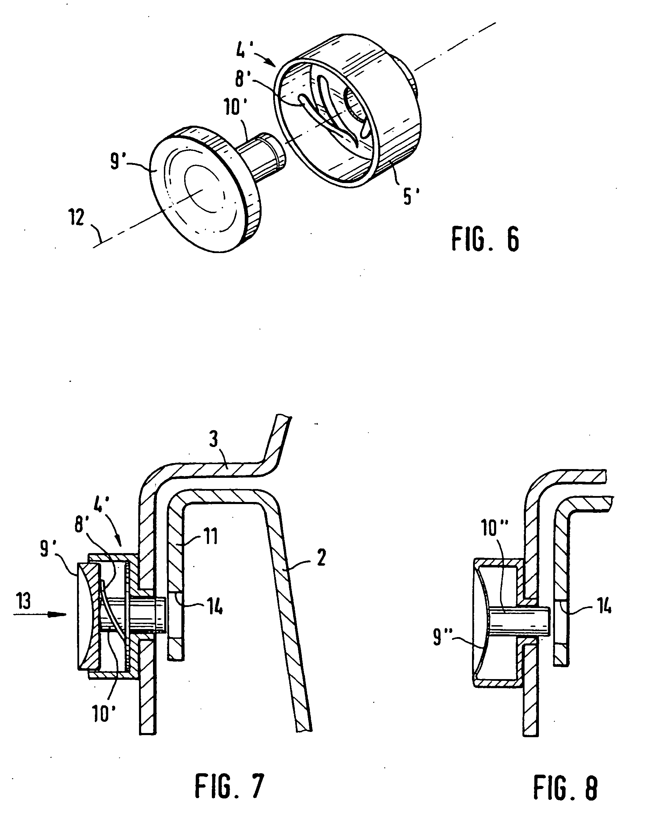

Die Fig. 6 und 7 zeigen ein zweites Ausführungsbeispiel, bei dem die Schließsicherung 4' ein als Staudruckkolben ausgebildetes Fußteil 5' und einen gegen eine Federanordnung 8' durch den in Richtung einer Achse 12 einwirkenden Winddruck verschiebbaren, eine Druckverstellplatte bildenden Kolben 9' aufweist. Dessen Kolbenstange 10 bildet in diesem Fall direkt einen Verriegelungsstift, der den Boden des Staudruckzylinders untersetzend, aus der in Fig. 7 gezeigten Ruhestellung an der vorderen Spitze des Dachkoffers durch den in Richtung des Pfeils 13 einwirkenden Fahrtwind in eine Verriegelungsausnehmung 14 des Dichtrandes 11 des Kofferunterteils 2 eingedrückt werden kann.

Die Fig. 8 zeigt eine Alternative, bei der anstelle eines durch den Winddruck verschiebbaren Kolbens eine federelastische Membran 9" vorgesehen ist, an der direkt ein Verriegelungsstift 10" befestigt ist. Auch hier ist die Ausbildung wieder so getroffen, dass in der Ruhestellung, also bei stehendem Fahrzeug, der Verriegelungsstift 10" noch nicht in die Verriegelungsaussparung 14 des Kofferunterteils eingreift, sondern erst wenn bei einer bestimmten Geschwindigkeit ausreichender Winddruck herrscht, so dass die Membran sich entsprechend durchbiegt. Die Verriegelung wird ja auch erst in der Fahrt benötigt, da das zu verhindernde Öffnen des Deckels bei der Fahrt durch den Fahrtwind eine gewisse Mindestgeschwindigkeit voraussetzt.

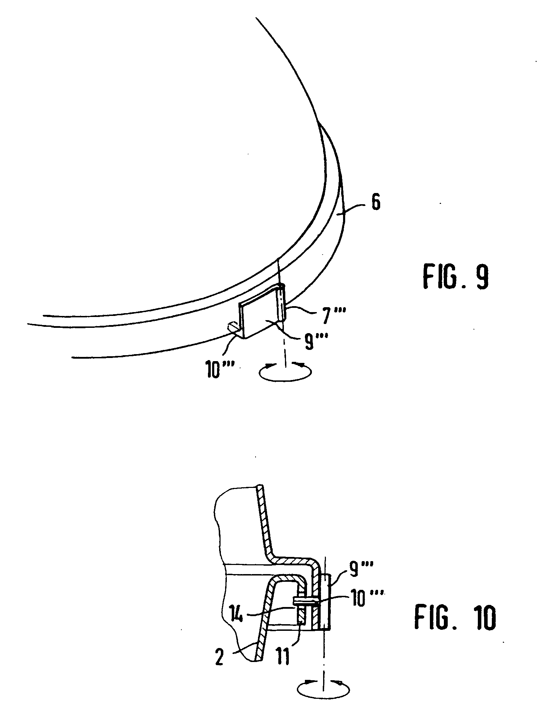

In den Fig. 9 und 10 ist schematisch ein Ausführungsbeispiel einer erfindungsgemäßen Schließsicherung mit einer Flügelplatte analog zu den Fig. 1 - 5 dargestellt, wobei aber die Schwenkachse der Schwenkplatte 9"' in den Fig. 9 und 10 nicht horizontal, also parallel zur Koffertrennebene, sondern vertikal, also senkrecht zu dieser Koffertrennebene verläuft. Die Flügelplatte 9"' ist beim Ausführungsbeispiel nach Fig. 9 so ausgebildet, dass sie den Rand 6 des Kofferdeckels überragt und am linken, dem Schwenkscharnier 7"' abgelegenen Ende, ein Verriegelungsglied 10"' trägt, welches den Dichtrand des Unterteils untergreift. Bei der Ausführungsform nach Fig. 10 ist statt dessen die Flügelplatte, die in diesem Fall den Deckelrand 6 nach unten nicht übergreifen braucht, mit einem Verriegelungsstift 10"' versehen, der analog zu den Ausführungsformen nach den Fig. 6 -8 in eine Aussparung 14 des Dichtrandes 11 des Kofferunterteils 2 eingreift.

## Patentansprüche

1. Schließsicherung für Dachkoffer zur Verhinderung eines Aufklappens des Kofferrandes durch zu hohen Winddruck oder bei Ausfall der normalen Schließanlage während der Fahrt, bei der ein Verriegelungsglied am einen Kofferteil in ein Gegenglied am anderen Kofferteil eingreift, **dadurch gekennzeichnet, dass** das am einen Kofferteil (3) angeordnete federnd in eine Nicht-Eingriffstellung vorgespannte Verriegelungsglied so ausgebildet und angeordnet ist, dass es durch den Fahrtwind nur während der Fahrt in seine Verriegelungsstellung verschwenkt wird.

2. Schließsicherung nach Anspruch 1, **dadurch gekennzeichnet, dass** das Verriegelungsglied mit einem staudruckabhängigen Betätigungsglied verbunden ist.

3. Schließsicherung nach Anspruch 1 oder 2, **dadurch gekennzeichnet, dass** das am einen Kofferteil angeordnete Verriegelungsglied ein Verriegelungshaken (10) oder Verriegelungsstift (10', 10") ist, der einen Randflansch (11) des Gegenkofferteils (2) untergreift oder übergreift bzw. in eine Querausnehmung (14) dieses Gegenkofferteils (2) eingreift.

4. Schließsicherung nach einem der Ansprüche 1 bis 3, **dadurch gekennzeichnet, dass** das Verriegelungsglied an einer durch den Fahrtwind beaufschlagten und in die Verriegelungsstellung verstellbaren Druckverstellplatte (9, 9', 9") angeordnet ist, die ihrerseits an einem am einen Kofferteil befestigbaren Fußteil federnd rückstellbar gelagert ist.

5. Schließsicherung nach Anspruch 4, **dadurch gekennzeichnet, dass** die Druckverstellplatte als Flügelplatte (9) am vorzugsweise als Fußplatte (5) ausgebildeten Fußteil schwenkbar gelagert ist.

6. Schließsicherung nach Anspruch 5, **dadurch gekennzeichnet, dass** die Schwenkachse horizontal d. h. parallel zur Koffertrennebene angeordnet ist.

7. Schließsicherung nach Anspruch 5, **dadurch gekennzeichnet, dass** die Schwenkachse vertikal d. h. senkrecht zur Koffertrennebene angeordnet ist.

8. Schließsicherung nach Anspruch 4, **dadurch gekennzeichnet, dass** die Druckverstellplatte den Kolben (9') eines Staudruckzylinders bildet, dessen Kolbenstange (10") das Verriegelungsglied trägt oder direkt bildet.

9. Schließsicherung nach Anspruch 4, **dadurch gekennzeichnet, dass** die Druckverstellplatte eine das Verriegelungsglied tragende federelastische Membran (9") ist.

10. Schließsicherung nach einem der Ansprüche 1 bis 9, **dadurch gekennzeichnet, dass** das Verriegelungsglied am Dachkoffer (3) angeordnet ist.

## Claims

1. Closing safety device for roof box in order to prevent the box edge from pivoting open due to excessive wind pressure or upon failure of the normal closing device during travel, in which a locking member on the one part of the box engages in a counter-member on the other part, **characterised in that** the locking member biased resiliently in a non-engagement position and disposed on the one box part (3) is so formed and arranged that it is pivoted into its locking position by the wind generated by the motion of the vehicle only during travel.

2. Closing safety device according to claim 1, **characterised in that** the locking member is connected to an actuator dependent upon dynamic pressure.

3. Closing safety device according to claim 1 or 2, **characterised in that** the locking member disposed on the one box part is a locking hook (10) or pin (10', 10"), which engages under or over an edge flange (11) of the opposite box part (2) or engages in a transverse recess (14) of this opposite box part (2).

4. Closing safety device according to one of claims 1 to 3, **characterised in that** the locking member is disposed on a pressure displacement plate (9, 9', 9") which is actuated by the travel wind and is displaceable into the locking position and which is itself mounted resiliently reversibly on a base part fixable to the one box part.

5. Closing safety device according to claim 4, **characterised in that** the pressure displacement plate is mounted pivotably as a pivoted plate (9) on the base part preferably formed as a base plate (5).

6. Closing safety device according to claim 5, **characterised in that** the pivotal axis is disposed horizontally, i.e. parallel to the box separation plane.

7. Closing safety device according to claim 5, **characterised in that** the pivotal axis is disposed vertically, i.e. perpendicular to the box separation plane.

8. Closing safety device according to claim 4, **characterised in that** the pressure displacement plate forms the piston (9') of a dynamic pressure cylinder, whose piston rod (10") bears or directly forms the locking member.

9. Closing safety device according to claim 4, **characterised in that** the pressure displacement plate is a resilient membrane (9") bearing the locking member.

10. Closing safety device according to one of claims 1 to 9, **characterised in that** the locking member is disposed on the roof box (3).

## Revendications

1. Blocage de fermeture pour coffre de toit destiné à empêcher un relèvement du bord du coffre dû à une pression de vent trop élevée ou en cas de défaillance de l'installation de fermeture normale pendant le déplacement, sur lequel un élément de verrouillage s'engage sur une partie de coffre dans un élément opposé sur l'autre partie de coffre, **caractérisé en ce que** l'élément de verrouillage disposé sur une partie de coffre (3) et pré-tendu de façon élastique dans une position de non-engagement est réalisé et disposé de telle sorte qu'il est basculé sous l'effet du vent de déplacement seulement pendant le parcours dans sa position de verrouillage.

2. Blocage de fermeture selon la revendication 1, **caractérisé en ce que** l'élément de verrouillage est relié à un élément d'actionnement dépendant de la pression dynamique.

3. Blocage de fermeture selon la revendication 1 ou 2, **caractérisé en ce que** l'élément de verrouillage disposé sur une partie de coffre est un crochet de verrouillage (10) ou une broche de verrouillage (10', 10") qui vient au-dessous ou au-dessus d'une bride de bordure (11) de la partie opposée de coffre (2) ou s'engage dans une cavité transversale (14) de cette partie opposée de coffre (2).

4. Blocage de fermeture selon l'une quelconque des revendications 1 à 3, **caractérisé en ce que** l'élément de verrouillage est disposé sur une plaque de réglage de pression (9, 9', 9") sollicitée par le vent dû au déplacement et réglable dans la position de verrouillage, laquelle est logée pour sa part sur une partie de base pouvant être fixée sur une partie de coffre de façon à pouvoir être rappelée de façon élastique.

5. Blocage de fermeture selon la revendication 4, **caractérisé en ce que** la plaque de réglage de pression se présentant sous forme de plaque à ailettes (9) est montée de manière à pouvoir pivoter sur la partie de base conçue de préférence comme plaque de base (5).

6. Blocage de fermeture selon la revendication 5, **caractérisé en ce que** l'axe de pivotement est disposé horizontalement, c'est-à-dire parallèlement au plan de séparation du coffre.

7. Blocage de fermeture selon la revendication 5, **caractérisé en ce que** l'axe de pivotement est disposé verticalement, c'est-à-dire perpendiculairement au plan de séparation de coffre.

8. Blocage de fermeture selon la revendication 4, **caractérisé en ce que** la plaque de réglage de pression forme le piston (9') d'un cylindre de pression dynamique, dont la tige de piston (10") porte ou forme directement l'élément de verrouillage.

9. Blocage de fermeture selon la revendication 4, **caractérisé en ce que** la plaque de réglage de pression est une membrane (9") à élasticité de ressort et portant l'élément de verrouillage.

10. Blocage de fermeture selon l'une quelconque des revendications 1 à 9, **caractérisé en ce que** l'élément de verrouillage est disposé sur le coffre de toit (3).
